# EUROPEAN PATENT APPLICATION

(11) **EP 2 230 782 A1**
(43) Date of publication of application: **22.09.2010**
(21) Application number: 09290203.0
(22) Date of filing: 19.03.2009
(51) Int. Cl.: H04B 10/08, H04L 27/26

(54) **Monitoring of non-linear distortions in a fiber-optic transmission system**

(71) Applicant: Alcatel Lucent, 75008 Paris (FR)
(72) Inventor: Buchali, Fred, 71336 Stuttgart (DE); Dischler, Roman, 70469 Stuttgart (DE)
(74) Representative: MERH-IP Matias Erny Reichl Hoffmann

(57) **Abstract**

The invention relates to a method for monitoring non-linear distortions in a fiber-optic transmission system, e.g. in an optical OFDM system. At the transmitter, an electrical time domain training signal is generated, with the signal values of the electrical time domain signal essentially lying on a common line through the origin of the complex plane. E.g. the signal values of the electrical signal may be real-valued signal values. The electrical time domain signal may be an OFDM time domain signal. The electrical time domain signal is converted into an optical signal. The optical signal is transmitted via a fiber link. At the receiver, based on the received optical signal, a received electrical time domain signal having received signal values (22, 23) is generated. A monitor signal for monitoring non-linear distortions is generated by determining a measure for the deviation of the received signal values (22, 23) from a common line (21) in the complex plane.

## Description

The invention relates to fiber-optic communication, in particular to a method and a system for monitoring non-linear distortions due to non-linear effects of optical fibers.

The optical Kerr-effect causes the refractive index of an optical fiber to increase with increasing light intensity, resulting in various non-linear effects. One non-linear effect is self-phase modulation (SPM): Short pulses of light cause a varying refractive index of the fiber. This variation of the refractive index results in a phase shift which in turn results in a frequency shift. Another non-linear effect is cross-phase modulation: In case of a multiple channel system, a channel with high signal power may induce a phase shift in a different channel. These and other non-linear effects are discussed in the textbook "Fiber-Optic Communication Systems", G. Agrawal, Third edition, 2002, pages 59-67, section 2.6. The discussion of the non-linear effects is hereby incorporated by reference.

Non-linear distortions increase with increasing launched power of the transmitter; thus, the launched power of the transmitter is often limited by the non-linear effects of the optical fiber. This limit for the launched power is also called non-linear threshold. On the other hand, increasing the launched power typically increases the signal-to-noise ratio and thus enhances the receipt of the optical signal as long as the optical signal is below the non-linear threshold. Thus, a fiber optic transmission system should operate close to the non-linear threshold.

Non-linear distortion due to non-linear effects is very critical in OFDM (orthogonal frequency-division multiplexing) based transmission systems. In such systems, the bandwidth of an optical channel is split into a multiplicity of subchannels (e.g. 256 subchannels). Each subchannel is associated with a subcarrier at the mid-frequency of the subchannel, with each subcarrier being modulated by a conventional modulation scheme (e.g. quadrature phase-shift keying) at a low symbol rate instead of a high symbol rate in single carrier modulation systems. By using a high number of subcarriers, the frequency response characteristics of each subchannel becomes nearly ideal.

In case of selecting the frequency spacing of adjacent subcarriers to be an integer multiple of the symbol rate 1/T of each subchannel, the subcarriers become orthogonal and ideally adjacent modulated subcarriers do not interfere. Such a multicarrier modulation scheme is called orthogonal frequency-division multiplexing (OFDM).

An OFDM signal is typically generated by means of an inverse discrete Fourier transform (in particular by an inverse fast Fourier-transform): The data to be transmitted is mapped to real-valued or complex-valued parallel symbol streams using a specific modulation scheme (e.g., phase-shift keying - PSK, or quadrature amplitude modulation - QAM) and then fed to a unit for performing an inverse discrete Fourier-transform resulting in an OFDM time domain signal composed of real-valued or complex-valued time-domain samples.

By using an OFDM transmission scheme for fiber-optics communication, the symbol rate per channel is reduced, thus increasing tolerance to chromatic dispersion (CD) and polarization mode dispersion (PMD).

In the time domain, the OFDM time domain signal has occasionally a very high amplitude, resulting in a high peak-to-average power ratio (PAR). Such a high amplitude occurs when the signals of the subchannels are added constructively in amplitude. In such a situation the fiber may be driven in the non-linear range for these high amplitudes, resulting in degradation of the optical signal due to non-linear effects.

Generally, monitoring of non-linear distortions is beneficial for controlling and optimizing optical transmission, in particular in case of OFDM signals which are highly vulnerable to non-linear distortions. This allows to operate the system close to the non-linear threshold at optimum signal-to-noise ratio.

In conventional transmission systems, a-priori measurements of the non-linear threshold may be performed for a given fiber link. However, in conventional systems no monitoring of non-linear distortions and no optimization of the launched power are performed with live data traffic. In conventional transmission systems, typically the global performance without any detailed conclusion to non-linearity is monitored (e.g. by monitoring the bit-error-rate). However, this does not allow to differ between non-linear distortion and other types of distortion such as PMD, CD and noise.

Hence, it is an object of present invention to provide a method and a system for monitoring non-linear distortions in a fiber-optic transmission system, in particular in an OFDM transmission system. Such a method and system should preferably be usable under live traffic conditions and provide a monitor-signal suitable for controlling the launched optical power during live traffic conditions.

These objects are achieved by the independent claims.

A first aspect of the invention relates to a method for monitoring non-linear distortions in a fiber-optic transmission system, e.g. in an optical OFDM system. At the transmitter, an electrical time domain signal is generated, with the signal values of the electrical time domain signal essentially lying on a common line through the origin of the complex plane (the signal fulfills this condition at least over a period of time). In other words: the signal values of the electrical time domain signal essentially have the same phase in the complex plane. E.g. the signal values of the electrical signal to be transmitted may be real-valued signal values. The electrical time domain signal may be an OFDM time domain signal. Based on the electrical time domain signal, an optical signal is generated. The optical signal is transmitted via a fiber link. At the receiver, based on the received optical signal, a received electrical time domain signal having received signal values is generated. A monitor signal for monitoring non-linear distortions is generated by determining a measure for the deviation of the received signal values from a common line in the complex plane. Preferably, such a line typically goes through the origin of the complex plane.

This concept is described more in detail by an example: E.g. the electrical time domain signal to be transmitted may be a real-valued signal (at least during a time period), with the signal values lying on the real axis of the complex plane. If the real-valued time domain signal is transmitted without non-linear distortions on the fiber, a real-valued signal is received. When e.g. using a coherent receiver, wherein the received optical signal is mixed with an optical LO (local oscillator) signal, typically a random but constant phase is added (due to the phase deviation of the LO with respect to the transmitter laser). This phase deviation is constant for each signal value, irrespective of the actual amplitude of the respective signal value (i.e. the phase deviation is the same for a signal value with low amplitude and a signal value with high amplitude). Comparing the real and imaginary parts of the received signal gives this phase deviation, independent of the amplitude (or power of the received signal). Due to the constant phase deviation, the signal values of the received electrical signal essentially lie on a linear line through the origin of the complex plane. If the optical signal suffers from non-linear distortions due to non-linear effects of the fiber, an additional phase deviation is added which varies in dependency of the actual signal amplitude. Thus, in case of non-linear distortions, the signal values of the received electrical signal do not lie on a common line through the origin anymore. Instead, the signal values are distributed around a (best-fit) common line. So any deviation of the signal values from a linear line (which corresponds to a linear correlation between real and imaginary parts) indicates a non-linear behavior of the fiber link. This measured deviation indicating the degree of non-linearity of the system can be used for monitoring of non-linear distortions. Monitoring of non-linear distortions allows to control the transmission power in a feedback control loop such that the transmission system operates close to the optimum power.

The non-linear threshold may be determined by stepwise increase or decrease of the power. The power may be increased or decreased until the monitor signal indicates that the non-linear threshold has been determined.

The concept may be used in coherent optical OFDM transmission systems, e.g. operating at 40 Gb/s data rate, 100 Gb/s data rate or above. Such systems are susceptible to non-linear distortions. The proposed method allows to monitor non-linearity without additional hardware effort (the monitor in the receiver may be realized by a digital signal processor which is typically anyway present in the receiver) and with live traffic. Since optical OFDM is susceptible to non-linear distortions, the proposed method makes optical OFDM more attractive.

As discussed in the example above, the signal values of the electrical signal to be transmitted may be real-valued signal values (in particular real-valued samples in case of digital signal processing). In case of a real-valued OFDM signal, such an OFDM signal may at a time contain a plurality of subcarrier symbols associated to positive and negative frequency subcarriers. Each subcarrier symbol associated to a negative subcarrier corresponds to the conjugate complex of a respective subcarrier symbol associated to the respective positive frequency subcarrier (the pair of negative and positive subcarriers are symmetrical to 0 Hz). The resulting OFDM time domain signal may contain one or more OFDM training symbols (which are repeated periodically). Alternatively, the signal values of the electrical signal to be transmitted may lie on the 45° line in the complex plane, where the real part corresponds to the imaginary part; in this case, the power of the real part corresponds to the power of the imaginary part of the signal.

According to a further alternative, the signal values may lie on the imaginary axis in the complex plane.

Preferably, the signal values of the electrical signal to be transmitted form a training sequence. This training sequence is preferably transmitted before a data sequence (payload). For allowing to continuously update the monitor signal, the training sequence is periodically repeated. In case of an OFDM system, the training sequence may correspond to one, two or even more OFDM training symbols. A sequence of OFDM data symbols may be transmitted after the one or more OFDM trainings symbols. In case of a real-valued OFDM (baseband) training sequence, the training sequence may be generated by using positive frequencies (i.e. modulated positive frequency subcarriers), wherein the modulation of the negative frequencies is given by the conjugate complex of the modulation of the positive frequencies.

An OFDM real-valued training sequence used for the purpose of monitoring non-linearity may be inserted in the time domain signal after an inverse fast Fourier-transform in the transmitter. Alternatively, such an OFDM real-valued training sequence may be generated by selecting upstream of the inverse fast Fourier-transform the negative frequency subcarrier symbols such that each negative frequency subcarrier symbol corresponds to the conjugate complex of a respective positive frequency subcarrier symbol associated to a positive frequency subcarrier, with the negative and positive subcarriers being symmetrical to 0 Hz.

In the receiver, this training sequence (in particular, the OFDM training symbol) may be characterized in terms of statistical characteristics of time domain samples. The real part of the time domain samples may be tested with respect to the imaginary part.

In the receiver, a statistical parameter indicating the deviation from a (best-fit) linear line may be determined. Such a line preferably goes through the origin of the complex plane. The line may be determined by linear regression.

In particular, a statistical parameter may be determined which is indicative of the distribution of the distances of the received signal values to the linear line through the origin of the complex plane.

This statistical parameter may correspond to the standard deviation or to the variance of the distances. Alternatively, the statistical parameter may also indicate the maximum of the distances to the line. Preferably, the linear line divides the complex plane in a first plane portion and a second plane portion. The statistical parameter corresponds to the sum of
- the maximum of the distances between the line and the received signal values in region above the line and
- the maximum of the distances between the line and the received signal values in the region below the line.

Preferably, for determining the monitor signal, the statistical parameter is normalized by a value depending on the maximum absolute value of the received signal values. E.g. the statistical parameter may by normalized by the maximum of the distances between a foot of the perpendicular from a received signal value to the best-fit line and a foot of the perpendicular from another signal value to the line. This will be discussed in detail in connection with the drawings.

According to an embodiment, a plurality of OFDM training symbols with different power is transmitted. This allows to faster determine the non-linear threshold. Due to the different power values of the OFDM training symbols, the non-linear threshold may be immediately determined without stepwise increase or decrease of the power.

The power of these OFDM symbols may be already different in the electrical domain of the transmitter or the power may be diversified in the optical domain.

The signal values of all of these OFDM training symbols may essentially lie on a common linear line through the origin of the complex plane. Alternatively, the signal values of one of the OFDM training symbol may lie on a common line, whereas the signal values of a different OFDM training symbol may lie on a different common linear line through the origin of the complex plane.

It should be noted that basically the above mentioned embodiments of the invention can be arbitrarily combined. Furthermore, it should be noted that the disclosure of the invention also covers other claim combinations than the claim combinations which are explicitly given by the back references in the dependent claims, i.e. the claims can be basically combined in any order.

A second aspect of the invention relates to a method for controlling the launched power of an optical transmitter. Here, the launched power is controlled in dependency of the monitor signal as discussed above. The control scheme may be realized in form of a feedback loop.

If the monitor signal indicates large non-linear distortions, the launched power may be reduced to a level without non-linear distortions or with acceptably small non-linear distortions.

According to a preferred embodiment, the launched power of an optical transmitted of a first transceiver is controlled. The optical transmitter is coupled to an optical receiver of a second transceiver via a fiber link. Said electrical time domain signal to be transmitted is generated at the first transceiver and the monitor signal is generated at the second transceiver. The monitor signal or a signal dependent thereon is transmitted to the first transceiver. This may be performed via functions of higher level (in the OSI model). In dependency on the signal transmitted to the first transceiver, the launched power of the optical transmitter in the first transmitter is optimized.

Such a system may be operated all time close to the non-linear threshold at optimum signal-to-noise ratio.

A third aspect of the invention relates to a system for monitoring non-linear distortions in a fiber-optic transmission system, in particular in an OFDM transmission system. The system comprises at least a transmitter and at least a receiver coupled via a fiber link. The transmitter and the receiver are configured to perform the method for monitoring non-linear distortions as discussed above. Accordingly, the transmitter is configured to generate an electrical time domain signal, with the signal values of the electrical time domain signal essentially lying on a common linear line through the origin of the complex plane (the signal fulfills this condition at least over a period of time). The transmitter is configured to generate an optical signal based on the electrical time domain signal. After transmitting the optical signal, the receiver generates a received electrical time domain signal based on the received optical signal. The receiver generates a monitor signal for monitoring non-linear distortions by determining a measure for the deviation of the received signal values from a common linear line in the complex plane.

A fourth aspect of the invention covers a receiver. The receiver is configured to generate a received electrical time domain signal having received signal values based on the optical signal as discussed above. Further, the receiver is configured to generate a monitor signal for monitoring non-linear distortions by determining a measure for the deviation of the received signal values from a common linear line in the complex plane.

A fifth aspect of the invention covers the transmitter for performing the method. The transmitter may generate the electrical time domain signal, which is structured in different signal segments: training and payload signal segments. In a training signal segment, the signal values of the electrical time domain signal essentially lie on a common linear line through the origin of the complex plane (e.g. in this signal segment the signal values are real-valued). This is not the case for a payload signal segment (e.g. in this signal segment the signal values are complex-valued) following the training signal segment. The training signal segment is periodically repeated.

The above remarks related to any aspect of the five aspects of the invention are also applicable to the other aspects of the invention.

The invention is explained below in an exemplary manner with reference to the accompanying drawings, wherein
- Fig. 1: illustrates an embodiment of a system for monitoring non-linear distortions in a fiber-optic transmission sys- tem;
- Figs. 2a and 2b: illustrate two exemplary diagrams indicating the position of the received signal values s(t) in the complex plane and their deviation from a linear relationship given by a line through the origin;
- Fig. 3: illustrates a more detailed block diagram of an exem- plary OFDM system configured to monitor non-linear dis- tortions;
- Fig. 4: illustrates an embodiment of a signal structure of an OFDM signal comprising training symbols; and
- Fig. 5: illustrates an embodiment of an optical transmission system capable to control the launched power of an opti- cal transmitter in dependency of a monitor signal indica- tive of non-linear distortions.

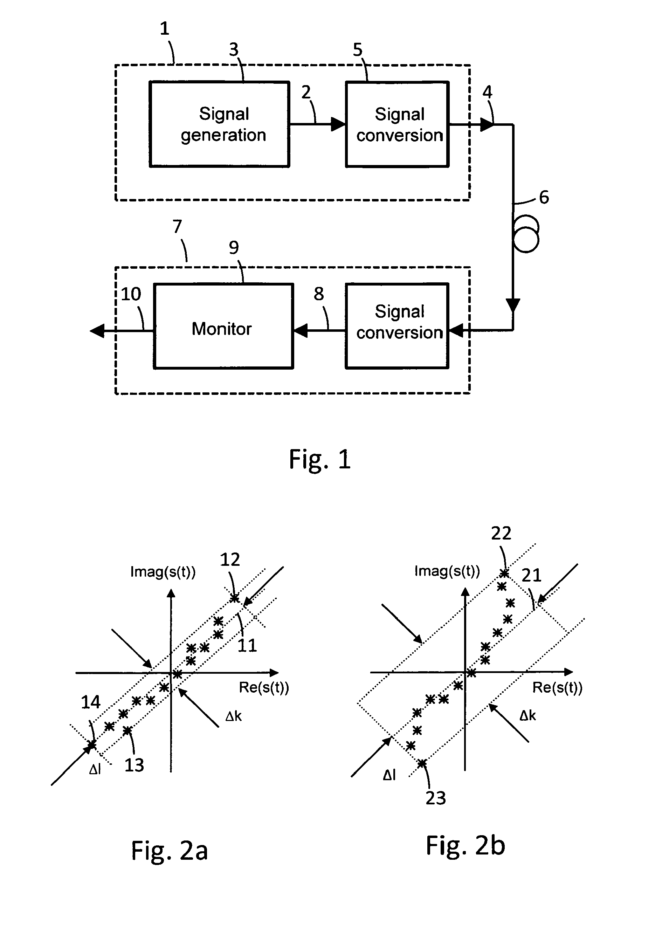

Fig. 1 shows an embodiment for monitoring of non-linear distortions in a fiber-optic transmission system, in particular in an OFDM transmission system. Here, a signal, preferably an OFDM training symbol, is generated at a transmitter 1 and subsequently analyzed in a receiver 2. The transmitter 1 is configured to generate by means of block 3 an electrical time domain signal 2, with the signal values of the electrical time domain signal essentially lying on a common line through the origin of the complex plane. E.g. the time domain signal may form a training sequence having real-valued signal values. The training sequence or a part thereof may be stored in the receiver as a sequence of digital signal values. In a block 5, an optical signal 4 is generated based on the electrical signal 2. The optical signal 4 is transmitted via a fiber link 6. On the fiber 6, the optical signal may be distorted due to various effects, in particular due to fiber non-linearity. The receiver 7 receives the optical signal and generates a received electrical time domain signal 8 having received signal values. When using a coherent receiver, typically a random but constant phase will be added to the received signal (due to a phase deviation of the local oscillator with respect to the laser of the transmitter).

The receiver comprises a monitor 9 for monitoring of non-linear distortions. The monitor 9 is not necessarily a dedicated circuit block but may be realized by means of a DSP (digital signal processor) which is also used for other tasks in the receiver. The monitor 9 generates a monitor signal 10 for indicating non-linear distortions. The monitor signal 10 is generated by determining the deviation of the received signal values 8 from a common line through the origin of the complex plane. In other words: the deviation from a linear correlation between the real parts and imaginary parts of the received signal values 8 is determined. This deviation is a measure for the transmission channel non-linearity.

The degree of non-linearity may be used for monitoring and system optimization, enabling operation of the system close to the optimum power and enabling online monitoring of the system status in parallel (under live traffic conditions).

Fig. 2a and Fig. 2b show two exemplary diagrams illustrating the position of the resulting received signal values s(t) (see signal 8 in Fig. 1) in the complex plane. In case of a coherent receiver, the signal values s(t) in Figs. 2a and Fig. 2b are typically signal values after frequency-down conversation (otherwise the phase would vary due to a frequency offset). The signal processing is preferably performed in the digital domain; thus the signal values are preferably samples.

As discussed above, typically a random but constant phase is added to the received signal (e.g. due to a phase deviation of the local oscillator in a coherent receiver with respect to the laser of the transmitter). If the optical signal suffers from non-linear distortions, an additional phase deviation is added during transmission. This phase deviation typically depends on the amplitude (or power) of the signal. Thus, any deviation from a linear correlation between the real parts real(s(t)) and imaginary parts imag(s(t)) of the received signal values s(t) can be assumed as non-linearity.

As shown in Figs. 2a and 2b, the samples agree to some extend to a linear dependency of the imaginary part versus the real part. In case the optical signal does not suffer from non-linear distortions, the received signal values would lie on a common line. Due to the fiber non-linearity, there is a deviation from the linear correlation between the real parts real(s(t)) and the imaginary parts imag(s(t)), i.e. a deviation from the common line 11 in Fig. 2a and from the common line 21 in Fig. 2b.

For determining the deviation, a statistical parameter may be determined which is indicative of the distribution of the distances of the samples s(t) to the line 11 in Fig. 2a or to the line 21 in Fig. 2b. The statistical parameter may be the standard deviation or variance. In the embodiment as shown in Figs. 2a and 2b, the statistical parameter is the width Δk of the channel region around the lines 11 and 21 which contains the signal values (s).

The width Δk may be determined by computing the sum of
- the maximum of the distances of the received signal values s(t) to the line 11, 21 for the signal values s(t) in the region above the line 11, 21 and
- the maximum of the distances of the received signal values s(t) to the line 11, 21 for the signal values s(t) in region below the line.

In Fig. 2a, the signal value 12 has the maximum distance to the line 11 when considering the signal values above the line 11, whereas the signal value 13 has the maximum distance to the line 11 when considering the signal values below the line 11. The distances of both signal values 12 and 13 to the line 11 are added to determine the statistical parameter Δk. In Fig. 2b, the distances of the two signal values 22 and 23 to the line 21 are added to determine the statistical parameter Δk.

The parameter Δk is further normalized by a value Δl depending on the maximum absolute signal of the considered signal values s(t). In Figs. 2a, the value Δl corresponds to distance between the two foots with maximum distance:
- the foot of the perpendicular from the signal value 12 to the line 11
   and
- the foot of the perpendicular from the signal value 14 to the line 11.
These both foots have the maximum distance to each other.

In Fig. 2b, the value Δl corresponds to distance between:
- the foot of the perpendicular from the signal value 22 to the line 21
   and
- the foot of the perpendicular from the signal value 23 to the line 21.
These both foots have the maximum distance to each other.

The ratio Δk/ Δl describes the amount of non-linearity of the system and this value can be applied as the monitor signal 10 for system monitoring. As evident from Figs. 2a and 2b, the deviation from the linear relationship in Fig. 2b is larger than the deviation from the linear relationship in Fig. 2a (i.e. the distortions are larger). Accordingly, the ratio Δk / Δl for the signal values in Fig. 2b is larger than the ratio Δk / Δl for the signal values in Fig. 2a.

Moreover, Fig. 2b indicates that the phase deviation tends to increase with increasing absolute value of the signal amplitude (see the samples 22 and 23 with the largest absolute value of the signal amplitude and with maximum phase deviation). This is typically the case when self-phase modulation (SPM) is the dominant non-linear effect.

The signal values used for determining the deviation in Figs. 2a and 2b may be complex signal samples of a received OFDM symbol (comprising a plurality of complex signal samples).

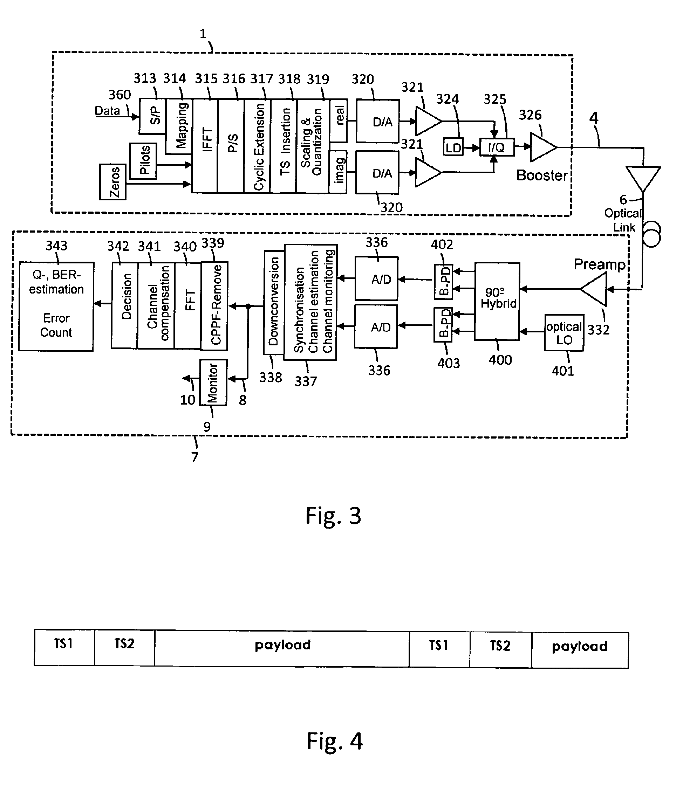

Fig. 3 shows a more detailed block diagram of an exemplary OFDM system configured to monitor non-linear distortions. Figurative elements in Figs. 1 and 3 denoted by the same reference signs are corresponding to each other. The concept as discussed in connection with Figs. 2a and 2b is also used in the system of Fig. 3.

The OFDM system comprises an OFDM transmitter 1 and OFDM receiver 7 coupled to the each other via a fiber optical link 6. At the OFDM transmitter 1, a digital input signal 360 is received and passed into a serial-to-parallel unit 313. The unit 313 generates parallel data streams which are fed to a mapping unit which maps a predefined number of data bits of a stream to a data symbol. The mapping is performed using the constellation of the underlying modulation scheme, e.g. BPSK, QPSK, QAM16 or QAM64. Each symbol is assigned to one of N subcarriers. It should be noted that in addition to the digital input signal 360, also pilot symbols 361 and/or zeros 362 may be assigned to the N subcarriers such that the resulting OFDM signal may comprise pilot subchannels and/or non-modulated subchannels.

The N subcarriers are typically merged using an inverse Fast Fourier Transform (IFFT) unit 315 and a following parallel-to-serial unit 316, thereby yielding a digital time domain signal. This digital time domain signal may be further processed in a plurality of digital signal processing steps prior to transmission. In a cyclic-extension unit 317, cyclic prefix and/or postfix samples may be inserted to the digital time domain signal so as to avoid inter-symbol interference (ISI). In a TS insertion unit 318, OFDM training symbols are inserted. The inserted OFDM training symbols are used in the receiver for monitoring of non-linear distortions.

Generally, the training symbols may be used for
- symbol recognition,
- channel estimation,
- frequency offset compensation, and
- channel monitoring, in particular monitoring of non-linear distortions.

A training symbol may be inserted as a time domain sequence of samples after the IFFT unit 315 (as shown in Fig. 3) or, in an alternative embodiment, in the frequency domain before the IFFT unit 315. In case the system uses a real-valued training sequence for monitoring of non-linear distortions, such a real-valued training sequence may be generated by using (upstream of the IFFT block 315) a symbol for a negative frequency subcarrier which is the conjugate complex of the symbol of a positive frequency subcarrier (each pair of a positive subcarrier and a negative frequency subcarrier is symmetrically positioned with respect to 0 Hz).

In a scaling and quantization unit 319, the digital time domain signal may be adjusted to the characteristics of the downstream digital-to-analog converters 320, e.g. to the resolution of the digital-to-analog converters 320 which may differ from the resolution of the digital signal processing before.

In the digital-to-analog (D/A) converters 320, the real part and the imaginary part of the digital time domain signal are converted into the real and imaginary part of a complex analog time domain signal. The analog time domain signal is amplified in power amplifiers 321. Subsequently, the amplified analog time domain signal is converted into an optical signal in an electrical-to-optical converter 324, 325. The electrical-to-optical converter 324, 325 may comprise a laser diode 324, with its laser light being modulated 325 in dependency of the amplified analog output signal. The OFDM transmitter 1 may also comprise an optical amplifier 326.

After transmission over the optical link 6, the OFDM signal is received at the optical OFDM receiver 7. The optical input signal may be pre-amplified by an optical amplifier 332 before being converted into an electrical input signal by coherent detection. Here, a 90° optical hybrid 400 is used which combines the received optical signal with two orthogonal variants of the LO signal generated by a local oscillator 401. The LO signal has typically a frequency offset which is compensated in an electrical down-conversion block 338. The optical hybrid 400 generates two pairs of differential signals, one differential signal associated with the inphase component and the other differential signal associated with the quadrature phase component. The two differential signals are converted to electrical inphase and quadrature phase components by two pairs of differential photodiodes 402 and 403.

The output signal of both differential photodiode pairs 402, 403 is converted into a complex digital signal using two analog-to-digital (A/D) converters 336. This digital input is processed in a number of digital signal processing steps before being split into N subcarriers using a Fast Fourier Transform unit 340. Such processing may comprise synchronization, channel estimation and channel monitoring in unit 337, down-conversion into the baseband in unit 338.

In Fig. 3, the complex signal 8 after down-conversion is used as an input signal s(t) for the monitor 9 configured to monitor non-linear distortions. As discussed in connection with Fig. 1 and Figs. 2a and 2b, the monitor 9 determines a monitor signal 10 by measuring the deviation from a linear correlation between the real part of s(t) and the imaginary part of s(t). The monitor signal 10 may be fed back to the transmitter 1 via a reverse channel (via the same fiber link 6 or a different fiber link) and may be used at the transmitter 1 for adapting the launched power. The monitor 9 is not necessarily a dedicated circuit block but may be realized by means of a DSP which is also used for other tasks in the receiver. In particular, a plurality or all of the blocks downstream of the analog-to-digital converters 336 may be realized by a DSP.

In parallel, the complex signal 8 is also used in a processing path for signal decision. In unit 339 the cyclic prefix and/or postfix samples are removed. Unit 340 performs a Fast Fourier Transform, thereby recovering the symbols on the subcarriers. These symbols are mapped to the constellation points of the underlying modulation scheme, e.g. BPSK, QPSK, QAM16 or QAM64. This is done in a decision unit 342. It is beneficial to perform a channel compensation 341 prior to making a decision in decision unit 342. The decision unit 342 also maps the subcarrier symbols into an output bit stream. Optionally, the output bit stream may undergo a BER-estimation (bit-error-rate) or Q-factor estimation in block 343. The resulting signal may be used for adapting the receiver and may be fed back via a reverse channel to the transmitter for adapting the transmitter.

As discussed above, the training sequence (i.e. the one or more OFDM training symbols) used for monitoring of non-linear distortions is preferably a real-valued sequence in the time domain. The training sequence may be transmitted before a sequence of data symbols (which form the payload) and may be periodically repeated. Such a real-valued training sequence may be generated by using modulated positive frequencies (modulated positive frequency subcarriers), with each subcarrier symbol associated to a negative subcarrier corresponding to the conjugate complex of a respective subcarrier symbol associated to a positive frequency subcarrier, where the pair of negative and positive subcarriers are symmetrical to 0 Hz. The used positive subcarriers may be variable.

Fig. 4 shows an embodiment of the signal structure of an OFDM signal as transmitted by the transmitter 1 of Fig. 1 or Fig. 3. The signal sections TS1 and TS2 correspond to two consecutive OFDM training symbols (which may be also called pilot symbols). The training symbols TS1 and TS2 are transmitted before a sequence of data symbols (which form the payload) and are repeated periodically. One or both OFDM training symbols TS1 and TS2 are used in the receiver 2 for monitoring of non-linear distortions.

The symbols TS1 and TS2 may be used for the different tasks given above. A symbol used for monitoring of non-linear distortions may be also used in parallel for a different task, e.g. channel estimation. Thus, in case a training symbol is synthesized for multiple tasks in parallel, additional overhead in the signal structure due to providing a training signal for measuring fiber non-linearity can be prevented.

Generally, the training symbols may be synthesized for multiple tasks in parallel. E.g. TS1 may be used for symbol recognition and for frequency offset compensation, whereas TS2 may be used for channel estimation and for monitoring of non-linear distortions.

As discussed above, for monitoring of non-linear distortions preferably a real-valued training sequence is used. Thus, in Fig. 4 the training symbol(s) TS1 and/or TS2 used for monitoring of non-linear distortions form(s) preferably a real-valued sequence. The payload may be a complex-valued signal. In this case, the transmitter switches between real-valued signal segments and complex-valued signal segments.

The signal values of the OFDM training symbols TS1 and TS2 may essentially lie on a common linear line (e.g. the real axis) through the origin of the complex plane. Alternatively, the signal values of the OFDM training symbol TS1 may lie on one common line, whereas the signal values of the OFDM training symbol TS2 may lie on a different common linear line through the origin of the complex plane.

A plurality of OFDM training symbols with different power may be transmitted. This allows to faster determine the non-linear threshold.

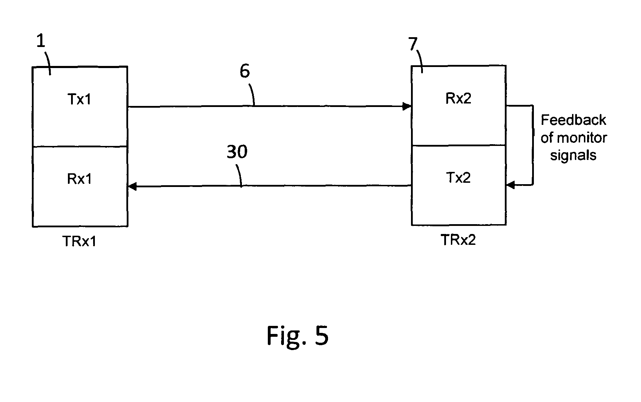

Fig. 5 illustrates an embodiment for a fiber-optic transmission system capable to control the launched power of an optical transmitter Tx1 as part of a transceiver TRx1 in dependency of a monitor signal indicative of non-linear distortions. The optical transmitter Tx1 is coupled to an optical receiver Rx2 of a transceiver TRx2 via a fiber link 6. The transmitter Tx1 and the receiver Rx2 may be implemented as shown in Fig. 1 or Fig. 3. The training sequence is generated at the transceiver TRx1 and the monitor signal indicative of non-linear distortions is generated at the transceiver TRx2 in response to the receipt of the training sequence. The monitor signal or a signal dependent is fed back to the transceiver TRx1. This may be performed via higher level functions. The signal is forwarded to the transceiver via a fiber link 30. Typically, the fiber link 6 and the fiber link 30 are formed by different fibers, nevertheless it also possible that the fiber link 6 and the fiber link 30 are realized by a bi-directional fiber (in this case different optical channels are used for the forward and the reverse paths).

The signal transmitted to the transceiver TRx1 can be applied in the transceiver TRx1 to optimize the launched power for the complete forward path (i.e. for the fiber link 6).

The launched power of the transmitter Tx2 in the transceiver TRx2 can be analogously adapted: a training sequence is generated in the transmitter Tx2; a monitor signal is generated at the transceiver TRx1 and send to the transceiver TRx2.

## Claims

1. A method for monitoring non-linear distortions in a fiber-optic transmission system, comprising:
- generating an electrical time domain signal (2), with the signal values of the electrical time domain signal essentially lying on a common linear line through the origin of the complex plane;
- based on the electrical time domain signal (2), generating an optical signal (4);
- transmitting the optical signal (4) via a fiber link (6);
- receiving the optical signal (4);
- based on the received optical signal (4), generating a received electrical time domain signal (8) having received signal values; and
- generating a monitor signal (10) for monitoring non-linear distortions by determining a measure for the deviation of the received signal values from a common linear line (11, 21) in the complex plane.

2. The method of claim 1, wherein determining a measure for the deviation is carried out by determining a measure for the deviation from a linear relationship between the real parts and imaginary parts of the received signal values.

3. The method of claim 1, wherein the signal values of the electrical time domain signal (2) to be transmitted are real-valued signal values.

4. The method of claim 1, wherein the electrical time domain signal (2) to be transmitted is an OFDM electrical time domain signal.

5. The method of claim 4, wherein
- the signal values of the OFDM electrical time domain signal (2) to be transmitted are real-valued signal values, and
- the OFDM electrical time domain signal (2) to be transmitted contains a plurality of subcarrier symbols associated to positive and negative frequency subcarriers, with each subcarrier symbol associated to a negative subcarrier corresponding to the conjugate complex of a subcarrier symbol associated to a respective positive frequency subcarrier.

6. The method of claim 1, wherein the signal values of the electrical domain signal (2) to be transmitted form a training sequence.

7. The method of claim 6, wherein the signal values of the OFDM electrical time domain signal (2) to be transmitted, which are essentially lying on a common line through the origin of the complex plane, correspond to one or more OFDM training symbols (TS1, TS2).

8. The method of claim 1, wherein a coherent receiver (2) having an electrical frequency down-converter (338) is used, and the received electrical time domain signal (8) is a signal downstream of the electrical frequency down-converter (338).

9. The method of claim 1, wherein determining a measure for the deviation comprises:
- determining a statistical parameter indicative of the distribution of the distances of the received signal values to the line (11, 21) in the complex plane.

10. The method of claim 9, wherein the line (11, 21) divides the complex plane in a first plane region and a second plane region, and the statistical parameter (Δk) corresponds to the sum of
- the maximum of the distances of the received signal values in the first plane region to the line (11, 21) and
- the maximum of the distances of the received signal values in the second plane region to the line (11, 21).

11. The method of claim 10, wherein the statistical parameter is normalized by a value (Δl) depending on the maximum absolute value of the signal values.

12. The method of claim 6, wherein the training sequence is periodically repeated.

13. The method of claim 1, wherein a plurality of OFDM training symbols having different power is transmitted.

14. A method for controlling the launched power of an optical transmitter (1, Tx1) of a first transceiver (TRx1), with the optical transmitter (1, Tx1) coupled to an optical receiver (7, Rx2) of a second transceiver (TRx2) via a fiber link (6), comprising:
- performing the method of claim 1, wherein the electrical time domain signal (2) to be transmitted is generated at the first transceiver (TRx1) and the monitor signal (10) is generated at the second transceiver (TRx2);
- transmitting the monitor signal (10) or a signal dependent thereon to the first transceiver (TRx1); and
- in dependency thereon, adjusting the launched power of the optical transmitter (1, Tx1) of the first transmitter (TRx1).

15. A system for monitoring non-linear distortions in a fiber-optic transmission system, comprising:
- a transmitter (1) configured to
- generate an electrical time domain signal (2), with the signal values of the electrical time domain signal (2) essentially lying on a common linear line through the origin of the complex plane,
- generate an optical signal (4) based on the electrical time domain signal (2), and
- transmit the optical signal (4) via a fiber link (6); and
- a receiver (7) coupled to the transmitter (1) via the fiber link (6) and configured to:
- receive the optical signal (4),
- based on the received optical signal (4), generate a received electrical time domain signal (8) having received signal values, and
- generate a monitor signal (10) for monitoring non-linear distortions by determining a measure for the deviation of the received signal values from a common linear line (11, 21) in the complex plane.

16. A receiver (7) configured to monitor non-linear distortions in a fiber-optic transmission system having a transmitter (1) configured to
- generate an electrical time domain signal (2), with the signal values of the electrical time domain signal essentially having the same phase in the complex plane,
- generate an optical signal (4) based on the electrical time domain signal, and
- transmit the optical signal (4) via a fiber link (6);
wherein the receiver is coupleable to the fiber link (6) and configured to:
- receive the optical signal (4),
- based on the received optical signal (4), generate a received electrical time domain signal (8) having received signal values, and
- generate a monitor signal (10) for monitoring non-linear distortions by determining a measure for the deviation of the received signal values from a common linear line (11, 21) in the complex plane.
